# EUROPÄISCHE PATENTSCHRIFT

(11) **EP 3 409 431 B1**
(45) Veröffentlichungstag und Bekanntmachung des Hinweises auf die Patenterteilung: **10.08.2022**
(21) Anmeldenummer: 18175566.1
(22) Anmeldetag: 01.06.2018
(51) Int. Cl.: B25J 21/02, G06F 21/55, G06F 21/60, G06F 21/86, G21F 7/04, F42D 5/05, G21F 1/06, G21F 1/10

(54) **ABSCHIRMENDE ANALYSEVORRICHTUNG**
SHIELDING ANALYSIS DEVICE
DISPOSITIF D'ANALYSE DE BLINDAGE

(30) Priorität: 02.06.2017 DE 102017112303
(43) Veröffentlichungstag der Anmeldung: 05.12.2018
(73) Patentinhaber: Lifetexsafety GmbH, 95482 Gefrees (DE)
(72) Erfinder: Smolik, Klaus, 95482 Gefrees (DE)
(74) Vertreter: Wittmann, Günther

(56) Entgegenhaltungen:
- EP-A1- 2 832 506
- WO-A2-03/035116
- DE-B3-102007 039 818

## Beschreibung

Die vorliegende Erfindung betrifft eine abschirmende Analysevorrichtung, die ermöglicht, ein mobiles Gerät mit einer Mobilfunkverbindung so zu analysieren, dass es während der Analyse nicht von einer entfernten Einheit ausgeschaltet werden kann und/oder Daten auf dem mobilen Gerät modifiziert und/oder gelöscht werden können.

### Stand der Technik

In der Forensik werden mobile Geräte, beispielsweise Mobiltelefone, Tablet-Computer oder dergleichen, analysiert, um Tathergänge zu ermitteln. Mobile Geräte können über eine Funkverbindung ausgeschaltet werden. Ferner können über eine Funkverbindung Daten modifiziert und/oder gelöscht werden. Dies ist unerwünscht, da dadurch die Aufklärung des Tathergangs erschwert wird.

Die EP 2 832506 offenbart eine hermetisch abgeschlossene Handschuhbox.

Die DE 10 2007 039 818 B3 offenbart eine Abschirmdecke.

Die WO 03/035116 A2 offenbart ine mobile Einweg-Isolierstation mit einer Handschuhbox.

Im Stand der Technik ist bekannt, mobile elektronische Geräte in einem abgeschirmten Behältnis zu einem abgeschirmten Analyseraum zu transportieren, um dort die Analyse vorzunehmen.

Dies ist unerwünscht, da der Transport des mobilen Endgerätes zu dem Analyseraum zeitaufwändig ist. Daher ist erwünscht, das mobile Endgerät möglichst in der Nähe seines Fundorts zu analysieren.

Die Erfindung stellt sich zur Aufgabe, eine Analysevorrichtung zu schaffen, die platzsparend in die Nähe eines Fundortes eines mobilen Endgerätes transportiert werden kann und verhindert, dass das mobile Endgerät während der Analyse durch eine über eine Mobilfunkverbindung erhaltene Anweisung ausgeschaltet wird, und/oder verhindert, dass in dem mobilen Endgerät gespeicherte Daten während der Analyse durch eine über eine Mobilfunkverbindung erhaltene Anweisung verändert und/oder gelöscht werden.

### Allgemeine Beschreibung der Erfindung

Die Aufgabe der Erfindung wird durch eine abschirmende Analysevorrichtung gemäß Anspruch 1 gelöst. Die abhängigen Ansprüche beanspruchen vorteilhafte Weiterbildungen.

Die abschirmende Analysevorrichtung umfasst eine Außenhülle, die ein flexibles Material aufweist, das elektromagnetische Strahlung reflektiert und/oder absorbiert. Die abschirmende Analysevorrichtung umfasst ferner eine Schleuse, die in der Außenhülle angeordnet ist und durch die zumindest ein Gegenstand durch die Außenhülle in die Analysevorrichtung gebracht werden kann. Die abschirmende Analysevorrichtung umfasst zumindest eine Fingeraufnahmeeinrichtung, die sich von der Außenhülle erstreckt und die dazu ausgebildet ist, einen Finger zumindest bis zum zweiten äußeren Fingergelenk aufzunehmen, so dass sich der Finger um das äußerste Fingergelenk und das zweitäußerste Fingergelenk bewegen kann. Die Außenhülle und/oder die Fingeraufnahmeeinrichtung weisen ein gewebtes Material mit galvanisch leitenden Fäden, ein Vliesmaterial mit galvanisch leitenden Fasern, eine galvanisch leitende Beschichtung, eine Graphitbeschichtung und/oder eine Carbonbeschichtung auf.

Da die Außenhülle ein flexibles Material aufweist, kann sie zusammengefaltet werden, so dass sie leicht transportiert werden kann und an ihrem Einsatzort aufgebaut werden kann. Durch die Fingeraufnahmeeinrichtung kann sichergestellt werden, dass ein mobiles Endgerät, das durch die Schleuse in der Außenhülle in die abschirmende Analysevorrichtung eingebracht wurde, bedient werden kann. Da die Außenhülle ein Material aufweist, das elektromagnetischen Strahlung reflektiert und/oder absorbiert, kann das mobile Endgerät seine aktuelle Position nicht an ein anderes elektronisches Gerät übermitteln. Ferner kann kein anderes elektronisches Gerät über eine Mobilfunkverbindung Inhalte, Daten oder dergleichen auf dem mobilen Endgerät modifizieren und/oder löschen. Ferner kann das mobile Endgerät in der abschirmenden Analysevorrichtung nicht über die Mobilfunkverbindung ausgeschaltet werden.

Die Fingeraufnahmeeinrichtung kann einen Bereich aufweisen, der einen Finger bis zum zweitäußersten Fingergelenk berühren kann. Es versteht sich, dass die abschirmende Analysevorrichtung eine Mehrzahl Fingeraufnahmeeinrichtungen aufweisen kann.

Bei einer Ausführungsform kann die Fingeraufnahme dazu ausgebildet sein, einen Finger bis zur Hand aufzunehmen. Bei dieser Ausführungsform kann die Fingeraufnahmeeinrichtung den Finger von der Fingerspitze bis zur Hand berühren.

Bei einer anderen Ausführungsform umfasst die abschirmende Analysevorrichtung zumindest eine Handaufnahmeeinrichtung, die eine Fingeraufnahmeeinrichtung aufweist und die Hand bis zum Handgelenk aufnehmen kann. Bei dieser Ausführungsform kann die Handaufnahmeeinrichtung den Bereich von der jeweiligen Fingerspitze bis zum Handgelenk berühren. Die Handaufnahmeeinrichtung weist ein gewebtes Material mit galvanisch leitenden Fäden, ein Vliesmaterial mit galvanisch leitenden Fasern, eine galvanisch leitende Beschichtung, eine Graphitbeschichtung und/oder eine Carbonbeschichtung auf.

Bei einer Ausführungsform kann die abschirmende Analysevorrichtung eine Armaufnahmeeinrichtung aufweisen, die dazu ausgebildet ist, einen Arm zumindest bis zum Ellbogengelenk aufzunehmen. Bei dieser Ausführungsform berührt die Armaufnahmeeinrichtung den Bereich von der jeweiligen Fingerspitze bis zum Ellbogengelenk. Die Armaufnahmeeinrichtung weist ein gewebtes Material mit galvanisch leitenden Fäden, ein Vliesmaterial mit galvanisch leitenden Fasern, eine galvanisch leitende Beschichtung, eine Graphitbeschichtung und/oder eine Carbonbeschichtung auf.

Da die Fingeraufnahmeeinrichtung, die Handaufnahmeeinrichtung und die Armaufnahmeeinrichtung elektromagnetische Strahlung reflektieren und/oder absorbieren, kann das mobile Endgerät in der abschirmenden Analysevorrichtung über die Mobilfunkverbindung weder Daten senden noch empfangen. Mittels der Fingeraufnahmeeinrichtungen, der Handaufnahmeeinrichtungen und der Armaufnahmeeinrichtungen kann das mobile Endgerät bedient werden. Zu diesem Zweck erstrecken sich die Fingeraufnahmeeinrichtungen, die Handaufnahmeeinrichtungen und die Armaufnahmeeinrichtungen im Einsatz von der Außenhülle in Richtung des Inneren der Analysevorrichtung. Die Mehrzahl Fingeraufnahmeeinrichtungen, Handaufnahmeeinrichtungen bilden zusammen mit der Außenhülle einen flexiblen und zusammenfaltbaren Handschuhkasten, der elektromagnetische Strahlung reflektiert und/oder absorbiert.

Die Außenhülle kann einen Schlauchbereich aufweisen, durch den Leitungen in die abschirmende Analysevorrichtung geführt werden. An einer Leitung kann eine Kamera und/oder eine Lichtquelle angeschlossen sein, damit während der Analyse die Ausgabe des mobilen Endgeräts analysiert werden kann. Bei einer Ausführungsform kann der Schlauchbereich die Schleuse bilden. Der Schlauchbereich weist ein gewebtes Material mit galvanisch leitenden Fäden, ein Vliesmaterial mit galvanisch leitenden Fasern, eine galvanisch leitende Beschichtung, eine Graphitbeschichtung und/oder eine Carbonbeschichtung auf.

Die Außenhülle und/oder der Schlauchbereich und/oder die Fingeraufnahmeeinrichtung und/oder die Handaufnahmeeinrichtung und/oder die Armaufnahmeeinrichtung weisen ein gewebtes Material mit galvanisch leitenden Fäden, ein Vliesmaterial mit galvanisch leitenden Fasern, eine leitende Beschichtung, eine Graphitbeschichtung und/oder eine Carbonbeschichtung aufweisen. Durch die galvanisch leitenden Fäden, die galvanisch leitenden Fasern und die galvanisch leitende Beschichtung werden elektromagnetische Wellen im Wesentlichen reflektiert. Durch die Graphitbeschichtung und/oder die Carbonbeschichtung werden elektromagnetische Wellen im Wesentlichen absorbiert. Dadurch kann sichergestellt werden, dass keine elektromagnetischen Wellen vom mobilen Endgerät aus der abschirmenden Analysevorrichtung heraus versendet werden oder innerhalb der abschirmenden Analysevorrichtung empfangen werden können.

Ein derartiges Material kann beispielsweise ein gewebtes Material sein, das Seidenfäden, beispielsweise Fallschirmseidenfäden, aufweist, die mittels Kupfer und/oder Nickel plattiert sind. Die Fäden können zu einem Gewebe gewebt werden.

Der Widerstand beträgt etwa 0,01 Ω/mm² und die Dämpfung beträgt in einem Bereich von 30 MHz bis 1,5 GHz etwa 90 bis etwa105 dB. In einem Bereich von etwa 1,5 GHz bis etwa 3 GHz beträgt die Dämpfung etwa 105 dB.

Die Außenhülle kann in ihrer Einsatzstellung einen flachen Boden aufweisen. Dadurch kann die abschirmende Analysevorrichtung einfach auf einem Tisch gestellt werden.

Die Außenhülle kann in Ihrer Einsatzstellung einen teilellipsoiden Querschnitt aufweisen. Dadurch kann das mobile Endgerät bequem mittels der Handaufnahmeeinrichtung gehalten und/oder betätigt werden. Der Ausdruck "teilellipsoid" kann auch den Ausdruck Teilkreis und/oder einen halbtonnenförmige bzw. teiltonnenförmige Form umfassen. Der Boden kann eine polygone, rechteckige, quadratische, runde oder ellipsoide Standfläche aufweisen.

In der Außenhülle kann zumindest eine flexible Stange angeordnet sein, die die Außenhülle im Einsatz (Einsatzstellung) in ihrer Einsatzstellung spannt. Während des Transportes in der Transportstellung kann die Außenhülle im Wesentlichen flach sein. Bei dieser Ausführungsform kann in der Außenhülle eine Aufnahme oder Tasche ausgebildet sein, in die die flexible Stange während der Einsatzstellung gesteckt wird. Dadurch spannt die flexible Stange die Außenhülle, so dass ein sich in der Außenhülle befindendes mobiles elektronisches Gerät betätigt werden kann. Zum Zusammenfalten der Außenhülle in der Transportstellung kann die flexible Stange aus der Tasche bzw. Aufnahme entnommen werden. Die flexible Stange kann mehrteilig sein, so dass die Abmessungen der abschirmenden Analysevorrichtung während des Transportes reduziert werden können.

In der Außenhülle kann zumindest eine flexible Stange angeordnet sein, die die Außenhülle im Einsatz spannt, wobei sich die flexible Stange in einer ersten gekrümmten Stellung befindet und sich die flexible Stange während des Transportes in der Transportstellung der Außenhülle, in der die Außenhülle flach ist, in einer zweiten gekrümmten Stellung befindet. Bei dieser Ausführungsform spannt sich die Außenhülle der abschirmenden Analysevorrichtung selbstständig auf.

Alternativ zu dem Vorgenannten und/oder zusätzlich kann die Außenhülle Öffnungen zum Einführen von Stangen aufweisen, die die Außenhülle im Einsatz in ihrer Einsatzstellung halten. Die Außenhülle kann Schläuche und/oder Schlaufen aufweisen, in die die Stangen eingeführt werden.

Die Außenhülle kann ein Sichtfenster aufweisen, das ein Material aufweist, das elektromagnetische Wellen absorbiert und/oder reflektiert. Ein derartiges Material wird beispielsweise in dem europäischen Patent EP 0 052 416 B1 beschrieben. Ein elektromagnetische Strahlung reflektierendes und/oder absorbierendes Material kann beispielsweise auf Acrylglas, PMMA (Polymethylmethacrylat) aufgebracht werden, um das Sichtfenster zu bilden.

Bei einer Ausführungsform kann die Fingeraufnahmeeinrichtung an der der Innenseite der abschirmenden Analysevorrichtung zugewandten Seite ein Material aufweisen, das zumindest eine taktile Eigenschaft einer menschlichen Fingerkuppe simuliert. Beispielsweise kann die taktile Eigenschaft der Hautwiderstand, eine kapazitive Eigenschaft der Fingerkuppe oder dergleichen sein. Dadurch kann sichergestellt werden kann, dass der berührungsempfindliche Bildschirm mittels eines Fingers bedient werden kann, der sich in einer Fingeraufnahmeeinrichtung befindet. Derartige Materialien werden beispielsweise bei Stiften verwendet, die auf berührungsempfindlichen Bildschirmen von Tablett-Computern verwendet werden.

### Kurze Beschreibung der Figuren

Die Erfindung wird nun unter Bezugnahme auf die beigefügten Figuren, die nicht beschränkende Ausführungsformen der Erfindung zeigen, detaillierter beschrieben, wobei:
Figur 1 eine Draufsicht auf eine erfindungsgemäße abschirmende Analysevorrichtung ist;
Figur 2 eine Frontansicht einer erfindungsgemäßen abschirmenden Analysevorrichtung ist; und
Figur 3 eine Draufsicht auf eine erfindungsgemäße abschirmende Analysevorrichtung in ihrer Transportstellung zeigt.

### Detaillierte Beschreibung der Figuren

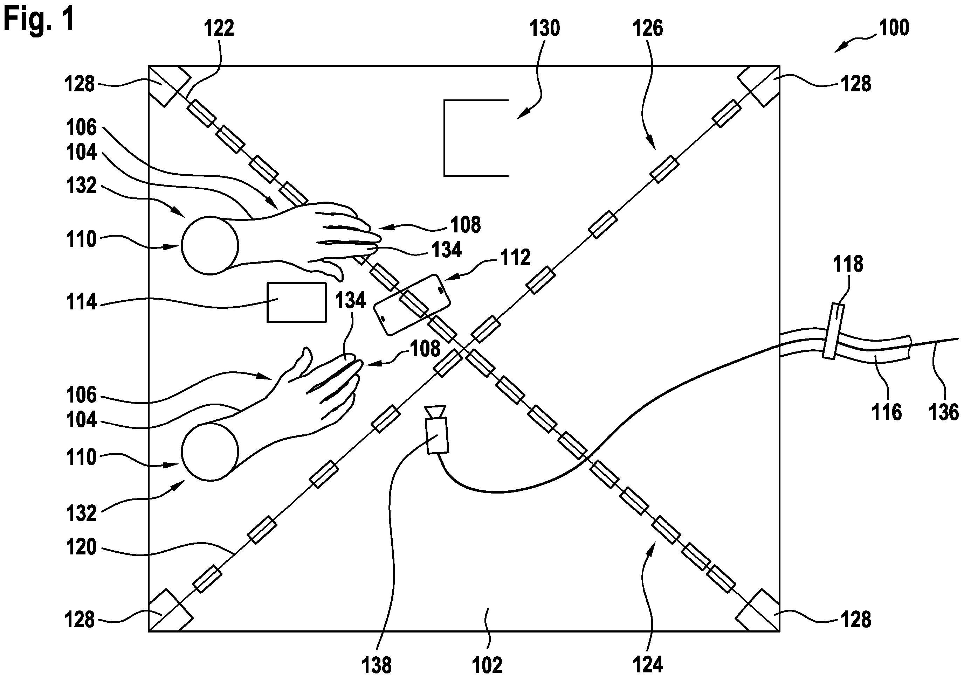

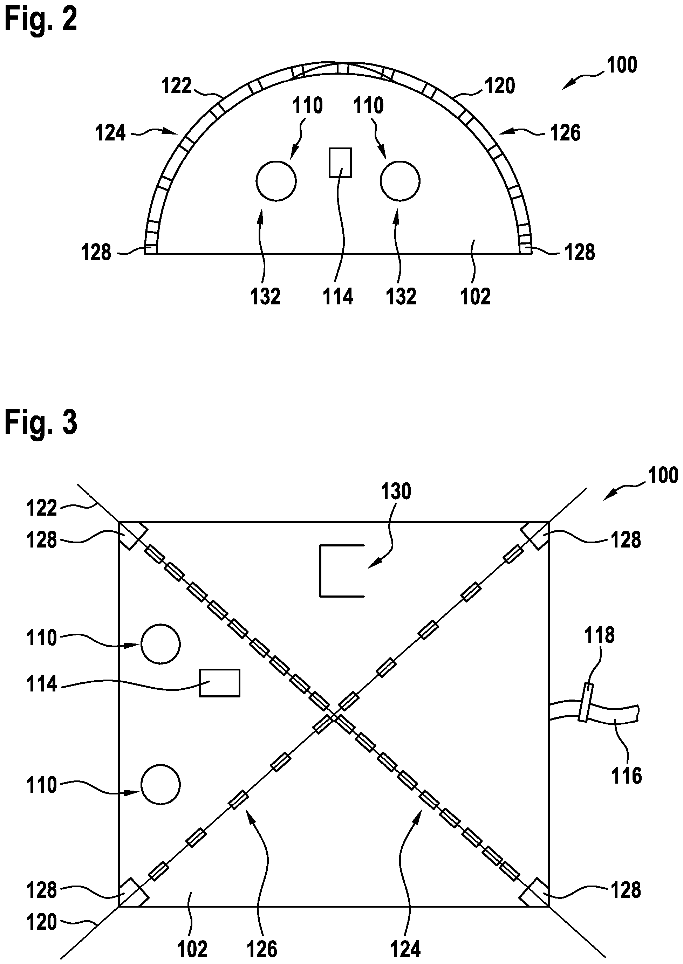

Die Funktionsweise der erfindungsgemäßen abschirmenden Analysevorrichtung 100 wird im Folgenden unter Bezugnahme auf Figuren 1 und 2 gezeigt, die die abschirmende Analysevorrichtung in ihrer Einsatzstellung zeigen und wobei Figur 1 eine Draufsicht zeigt und Figur 2 eine Frontansicht zeigt.

Die abschirmende Analysevorrichtung 100 umfasst eine Außenhülle 102 mit einer Mehrzahl Laschen 124, 126, durch die flexible Stangen 120, 122 geschoben werden. Die flexiblen Stangen 120, 122 werden diagonal über die Außenhülle 102 geführt und spannen die Außenhülle 102 wie ein Zelt, eine Halbtonne, eine Tonne oder eine beliebige andere Form. Die flexiblen Stangen 120, 122 sind in Taschen 128 an den Ecken der Außenhülle 102 eingeführt. Die flexiblen Stangen können aus Kunststoff, glasfaserverstärktem Kunststoff oder dergleichen hergestellt sein.

Die flexible Außenhülle 102 ist aus einem Material hergestellt, das elektromagnetische Wellen reflektiert und/oder absorbiert. Bei einer Ausführungsform kann die flexible Außenhülle ein Gewebe aus einem Fallschirmseidenfaden aufweisen, wobei der Fallschirmseidenfaden mit Kupfer und Nickel plattiert ist. Bei dieser Ausführungsform beträgt die Dämpfung etwa 90 bis etwa150 dB von 30 MHz bis etwa 1,5 GHz und mehr als etwa 105 dB in einem Bereich von etwa 1,5 GHz bis etwa 3 GHz. Bei einer anderen Ausführungsform kann die flexible Außenhülle 102 ein Gewebe aus einem Polyesterfaden aufweisen, der mit Kupfer und Nickel plattiert ist. Ein derartiges Gewebe hat eine Dämpfung von etwa 60 bis etwa75 dB von etwa 30 MHz bis etwa 1,5 GHz und eine Dämpfung von etwa 70 etwa 80 dB in einem Bereich von etwa 1,5 GHz bis etwa 3 GHz. Ein derartiges galvanisch leitendes Material führt im Wesentlichen zu einer Reflexion der elektromagnetischen Strahlung, so dass die elektromagnetische Strahlung nicht durch die flexible Außenhülle 102 durchdringen kann bzw. dieses nicht passieren kann.

Ein mobiles Endgerät 112, beispielsweise ein Mobiltelefon, das über die Schleuse 130 in die abschirmende Analysevorrichtung 100 gebracht wurde, kann weder Daten an die Umgebung außerhalb der flexiblen Außenhülle 102 senden noch Daten aus einem Bereich außerhalb der flexiblen Außenhülle 102 empfangen.

Die flexible Außenhülle kann eine Carbonbeschichtung oder eine Graphitbeschichtung aufweisen. Eine Carbonbeschichtung kann beispielsweise mittels einer carbonhaltigen Farbe hergestellt werden. Die carbonhaltige Farbe kann eine zusätzliche Dämpfung von etwa 35 dB bis etwa 40 dB in einem Bereich von etwa 0,03 GHz bis etwa 4 GHz bewirken.

Bei einer Ausführungsform umfasst die Schleuse 130 einen abschirmenden Reißverschluss, der längs, quer oder schräg eingesetzt ist. Als zusätzliche Abschirmung dient eine Art Rollo aus ebenfalls abschirmendem Material, das beispielsweise über eine Magnetstreifenleiste links und rechts an den Rändern sowie unten quer dicht abschließt.

Sobald sich das mobile Endgerät 112 innerhalb der flexiblen Außenhülle 102 befindet, kann ein Nutzer seine Finger, Hände und Arme in die Handhabungseinrichtung 132 durch die Öffnungen 110 einführen, die die Armaufnahmeeinrichtung 104 mit der Handaufnahmeeinrichtung 106 und der Fingeraufnahmeeinrichtung 108 umfasst. Die Fingeraufnahmeeinrichtungen 108 berühren im Wesentlichen die Finger entlang ihrer Erstreckung. Die Handaufnahmeeinrichtung 106 umschließt im Wesentlichen die Hand eines Nutzers. Die Armaufnahmeeinrichtung 104 umschließt im Wesentlichen den Unterarm eines Benutzers, beispielsweise bis zum Ellbogengelenk. Die Handhabungseinrichtungen 132 arbeiten im Wesentlichen wie die Handschuhe eines Handschuhkastens.

An den Spitzen der Fingeraufnahmeeinrichtungen 108 kann ein Material 134 angeordnet sein, das zumindest eine Eigenschaft eines Fingers aufweist, beispielsweise einen Widerstand, der sich im Bereich des Hautwiderstandes befindet und/oder eine kapazitive Eigenschaft der Haut simuliert. Ein derartiges Material ist beispielsweise von Stiften bekannt, mit denen auf berührungsempfindlichen Bildschirmen virtuell geschrieben werden kann.

Bei einer Ausführungsform kann ein Anwender mittels der Fingeraufnahmeeinrichtungen 108 einen Stift halten, mit dem der berührungsempfindliche Bildschirm des mobilen Endgeräts bedient werden kann.

Der Nutzer kann über ein Sichtfenster 114 die Ausgaben des mobilen Endgeräts 112 beobachten. Das Sichtfenster 112 umfasst eine Schicht, die ein elektromagnetische Strahlung reflektierendes Material aufweist und/oder eine Schicht, die ein elektromagnetische Strahlung absorbierendes Material aufweist.

Alternativ hierzu oder zusätzlich umfasst die Außenhülle einen schlauchartigen Bereich 116, durch den eine Leitung 136 geführt werden kann. Der schlauchartige Bereich 116 kann die Schleuse bilden, durch die ein Gegenstand in die abschirmende Analysevorrichtung eingeführt werden kann. An die Leitung kann eine Kamera 138 angeschlossen sein, die die Bildschirmausgaben des mobilen Endgerätes 112 erfasst und an eine Anzeigeeinrichtung (nicht gezeigt) überträgt. Die abschirmende Analysevorrichtung 100 bildet mit der Kamera 138 und der Leitung 136 ein Analysesystem. Der Schlauchbereich 116 der flexiblen Außenhülle 102 umfasst einen Verschluss 118 in Form eines Streifens, der um den Schlauchbereich 116 eng gewickelt werden kann, um das Eintreten bzw. Austreten von elektromagnetischer Strahlung bzw. elektromagnetischen Wellen in die abschirmende Analysevorrichtung 100 und aus dieser zu vermeiden.

Es versteht sich, dass die Handhabungseinrichtungen 132, der Schlauchbereich 116 und/oder der Verschluss 118 das gleiche Material wie die flexible Außenhülle 102, das zuvor beschrieben wurde, aufweisen können.

Figur 3 zeigt die abschirmende Analysevorrichtung 100 in ihrer Transportstellung. Die flexiblen Stangen 120, 122 werden aus den Taschen 128 entnommen. Dadurch verlieren die flexiblen Stangen 120, 122 ihrer Spannung, so dass sie sich gerade erstrecken und die flexible Außenhülle 102 flach ist. Es versteht sich, dass die flexiblen Stangen teilbar sein können, um die Abmessungen der abschirmenden Analysevorrichtung 100 in ihrer Transportstellung zu reduzieren.

Die vorliegende Erfindung hat den Vorteil, dass die abschirmende Analysevorrichtung in ihrer Transportstellung kleine Abmessungen aufweist und problemlos zu einem Fundort eines mobilen Endgerätes transportiert werden kann. Die abschirmende Analysevorrichtung ist eine mobile abschirmende Analysevorrichtung. Die abschirmende Analysevorrichtung 102 kann von einem Nutzer schnell von der Transportstellung in die Einsatzstellung gebracht werden, indem die flexiblen Stangen 120, 122 in den Taschen 128 angeordnet werden, wodurch sich die flexible Außenhülle 102 in Form eines Zeltes, einer Halbtonne, einer Tonne oder einer beliebigen anderen Form aufspannt.

Anschließend kann der Nutzer das mobile Endgerät durch die Schleuse 130 in die mobile abschirmende Analysevorrichtung 100 einführen. Der Nutzer führt seine Finger, Hände und seinen Unterarm durch Öffnungen 110 der Handhabungseinrichtung, um das mobile Endgerät mit einer Hand zu halten und mit einem Finger oder einem Stift zu bedienen. Der Nutzer kann die Ausgabe des mobilen Endgerätes durch das Sichtfenster 114 und/oder mittels einer in der flexiblen Außenhülle 102 angeordneten Kamera 138 beobachten, wobei die Kamera 138 die erfassten Bildsignale über eine Leitung 136, die durch einen abgeschirmten Schlauchbereich 116 geführt wird, an eine Anzeigeeinrichtung (nicht gezeigt) überträgt.

Da die mobile abschirmende Analysevorrichtung 100 einfach zu einem Fundort eines mobilen Endgerätes 112 transportiert werden kann, ergibt sich für die forensische Auswertung ein Zeitvorteil, da das mobile Endgerät nicht zu einem abgeschirmten Analyseraum transportiert werden muss.

## Patentansprüche

1. Abschirmende Analysevorrichtung (100), aufweisend
- eine Außenhülle (102), die ein flexibles Material aufweist, das elektromagnetischen Strahlung reflektiert und/oder absorbiert;
- eine Schleuse (116, 130), die in der Außenhülle angeordnet ist und durch die zumindest ein Gegenstand (112) durch die Außenhülle (102) in die abschirmende Analysevorrichtung gebracht werden kann; und
- zumindest eine Fingeraufnahmeeinrichtung (108), die ein flexibles Material aufweist, das elektromagnetischen Strahlung reflektiert und/oder absorbiert, die sich von der Außenhülle (102) erstreckt und die dazu ausgebildet ist, einen Finger zumindest bis zum zweitäußersten Fingergelenk aufzunehmen, so dass sich der Finger um das äußerste Fingergelenk und um das zweitäußerste Fingergelenk bewegen kann,
- wobei die Außenhülle (102) und/oder die Fingeraufnahmeeinrichtung (108) zumindest eines von Folgendem aufweisen:
- ein gewebtes Material mit galvanisch leitenden Fäden;
- ein Vliesmaterial mit galvanisch leitenden Fasern;
- eine galvanisch leitende Beschichtung;
- eine Graphitbeschichtung; und/oder
- eine Carbonbeschichtung;
wobei die Fingeraufnahmeeinrichtung (108) an der der Innenseite der abschirmenden Analysevorrichtung zugewandten Seite ein Material (134) aufweist, das zumindest eine taktile Eigenschaft einer menschlichen Fingerkuppe simuliert.

2. Abschirmende Analysevorrichtung (100) nach Anspruch 1, **dadurch gekennzeichnet, dass** die Fingeraufnahmeeinrichtung (108) dazu ausgebildet ist, einen Finger bis zur Hand aufzunehmen.

3. Abschirmende Analysevorrichtung (100) nach Anspruch 1 oder 2, **gekennzeichnet durch** zumindest eine Handaufnahmeeinrichtung (106), die ein flexibles Material aufweist, das elektromagnetischen Strahlung reflektiert und/oder absorbiert, die sich von der Außenhülle (102) erstreckt und die eine Mehrzahl Fingeraufnahmeeinrichtungen aufweist und die Hand bis zum Handgelenk aufnehmen kann,
- wobei die Handaufnahmeeinrichtung (106) zumindest eines von Folgendem aufweist:
- ein gewebtes Material mit galvanisch leitenden Fäden;
- ein Vliesmaterial mit galvanisch leitenden Fasern;
- eine galvanisch leitende Beschichtung;
- eine Graphitbeschichtung; und/oder
- eine Carbonbeschichtung.

4. Abschirmende Analysevorrichtung (100) nach einem der Ansprüche 1 bis 3, **gekennzeichnet durch** eine Armaufnahmeeinrichtung (104), die ein flexibles Material aufweist, das elektromagnetischen Strahlung reflektiert und/oder absorbiert, die sich von der Außenhülle (102) erstreckt und die dazu ausgebildet ist, einen Arm bis zum Ellbogengelenk aufzunehmen,
- wobei die Armaufnahmeeinrichtung (104) zumindest eines von Folgendem aufweist:
- ein gewebtes Material mit galvanisch leitenden Fäden;
- ein Vliesmaterial mit galvanisch leitenden Fasern;
- eine galvanisch leitende Beschichtung;
- eine Graphitbeschichtung; und/oder
- eine Carbonbeschichtung.

5. Abschirmende Analysevorrichtung (100) nach einem der Ansprüche 1 bis 4, **dadurch gekennzeichnet, dass** die Außenhülle einen Schlauchbereich (116) aufweist, durch den eine Leitung (136) in die abschirmende Analysevorrichtung geführt wird,
- wobei der Schlauchbereich (116) zumindest eines von Folgendem aufweist:
- ein gewebtes Material mit galvanisch leitenden Fäden;
- ein Vliesmaterial mit galvanisch leitenden Fasern;
- eine galvanisch leitende Beschichtung;
- eine Graphitbeschichtung; und/oder
- eine Carbonbeschichtung.

6. Abschirmende Analysevorrichtung (100) nach einem der Ansprüche 1 bis 5, **dadurch gekennzeichnet, dass**
- die Außenhülle (102) in Ihrer Einsatzstellung einen flachen Boden aufweist;
- die Außenhülle (102) in Ihrer Einsatzstellung einen teilellipsoiden Querschnitt aufweist;
- die Außenhülle (102) in Ihrer Einsatzstellung einen teiltonnenförmigen Querschnitt aufweist;
- die Außenhülle (102) in Ihrer Einsatzstellung einen halbtonnenförmigen Querschnitt aufweist;
- in der Außenhülle (102) zumindest eine flexible Stange (120, 122) angeordnet ist, die die Außenhülle im Einsatz in ihrer Einsatzstellung spannt, wobei während des Transportes in der Transportstellung der Außenhülle im Wesentlichen flach ist;
- in der Außenhülle (102) zumindest eine flexible Stange (120, 122) angeordnet ist, die die Außenhülle im Einsatz in ihrer Einsatzstellung spannt, wobei sich die flexible Stange in einer ersten gekrümmten Stellung befindet und sich die flexible Stange während des Transportes in der Transportstellung der Außenhülle, in der die Außenhülle flach ist, in einer zweiten gekrümmten Stellung befindet; und/oder
- die Außenhülle Öffnungen zum Einführen von Stangen (120, 122) aufweist, die die Außenhülle im Einsatz in ihrer Einsatzstellung halten.

7. Abschirmende Analysevorrichtung (100) nach einem der Ansprüche 1 bis 6, **dadurch gekennzeichnet, dass** die Außenhülle ein Sichtfenster (114) aufweist, das ein Material aufweist, das elektromagnetische Wellen absorbiert und/oder reflektiert.

## Claims

1. A shielding analysis device (100), comprising
- an outer shell (102) comprising a flexible material that reflects and/or absorbs electromagnetic radiation;
- an airlock (116, 130) disposed in the outer shell and through which at least one object (112) can be brought into the shielding analysis device through the outer shell (102); and
- at least one finger-receiving means (108) comprising a flexible material that reflects and/or absorbs electromagnetic radiation, extending from the outer shell (102) and adapted to receive a finger at least to the second outermost finger joint such that the finger can move about the outermost finger joint and about the second outermost finger joint,
- wherein at least one of the outer sleeve (102) and the finger receiving means (108) comprises at least one of the following:
- a woven material having galvanically conductive threads;
- a nonwoven material having galvanically conductive fibers;
- an electroconductive coating;
- a graphite coating; and/or
- a carbon coating;
wherein the finger receiving means (108) comprises, on the side facing the inside of the shielding analysis device a material (134) that simulates at least a tactile characteristic of a human fingertip.

2. The shielding analysis device (100) according to claim 1, **characterized in that** the finger receiving means (108) is adapted to receive a finger up to the hand.

3. The shielding analysis device (100) according to claim 1 or 2, **characterized by** at least one hand receiving means (106) comprising a flexible material reflecting and/or absorbing electromagnetic radiation extending from the outer shell (102) and comprising a plurality of finger receiving means and being adapted to receive the hand up to the wrist,
- wherein the hand receiving means (106) comprises at least one of the following:
- a woven material having galvanically conductive filaments;
- a nonwoven material having galvanically conductive fibers;
- an electroconductive coating;
- a graphite coating; and/or
- a carbon coating.

4. The shielding analysis device (100) according to any one of claims 1 to 3, **characterized by** an arm receiving means (104) comprising a flexible material that reflects and/or absorbs electromagnetic radiation extending from the outer shell (102) and adapted to receive an arm up to the elbow joint,
- wherein the arm receiving means (104) comprises at least one of the following:
- a woven material having galvanically conductive filaments;
- a nonwoven material having galvanically conductive fibers;
- an electroconductive coating;
- a graphite coating; and/or
- a carbon coating.

5. The shielding analysis device (100) according to any one of claims 1 to 4, **characterized in that** the outer shell comprises a tubing portion (116) through which a conduit (136) is passed into the shielding analysis device,
- wherein the tubing portion (116) comprises at least one of the following:
- a woven material having galvanically conductive filaments;
- a nonwoven material having galvanically conductive fibers;
- an electroconductive coating;
- a graphite coating; and/or
- a carbon coating.

6. The shielding analysis device (100) according to any one of claims 1 to 5, **characterized in that**
- the outer shell (102) comprises a flat bottom in its deployment position;
- the outer shell (102) comprises a partially ellipsoidal cross-section in its deployment position;
- the outer shell (102) comprises a part-barrel-shaped cross-section in its deployment position;
- the outer shell (102) comprises a half-barrel-shaped cross-section in its deployment position;
- at least one flexible rod (120, 122) is arranged in the outer shell (102), which rod tensions the outer shell in its deployment position in use, wherein during transport in the transport position the outer shell is substantially flat;
- at least one flexible rod (120, 122) is disposed in the outer shell (102) for tensioning the outer shell in its deployment position during use, the flexible rod being in a first curved position and the flexible rod being in a second curved position during transport in the transport position of the outer shell in which the outer shell is flat; and/or
- the outer shell comprises openings for insertion of rods (120, 122) that maintain the outer shell in its deployment position during use.

7. The shielding analysis device (100) according to any one of claims 1 to 6, **characterized in that** the outer shell comprises a viewing window (114) comprising a material that absorbs and/or reflects electromagnetic waves.

## Revendications

1. Dispositif d'analyse de blindage (100), comprenant :
- une enveloppe externe (102) qui comprend un matériau flexible qui réfléchit et/ou absorbe le rayonnement électromagnétique ;
- un moyen de blocage d'air (116, 130) qui est disposé à l'intérieur de l'enveloppe externe et au travers duquel au moins un objet (112) peut être amené à l'intérieur du dispositif d'analyse de blindage au travers de l'enveloppe externe (102) ; et
- au moins un moyen de réception de doigt (108) qui comprend un matériau flexible qui réfléchit et/ou absorbe le rayonnement électromagnétique, qui est étendu depuis l'enveloppe externe (102) et qui est adapté pour recevoir un doigt au moins jusqu'à la seconde articulation du doigt la plus externe de telle sorte que le doigt puisse se déplacer par rapport à l'articulation du doigt la plus externe et par rapport à la seconde articulation du doigt la plus externe,
- dans lequel au moins un composant constitutif pris parmi l'enveloppe externe (102) et le moyen de réception de doigt (108) comprend au moins l'un des constituants qui suivent :
- un matériau tissé qui comporte des fils conducteurs par conduction galvanique ;
- un matériau non tissé qui comporte des fibres conductrices par conduction galvanique ;
- un revêtement électro-conducteur ;
- un revêtement en graphite ; et/ou
- un revêtement en carbone ;
dans lequel le moyen de réception de doigt (108) comprend, sur le côté qui fait face à l'intérieur du dispositif d'analyse de blindage, un matériau (134) qui simule au moins une caractéristique tactile d'un bout de doigt de l'être humain.

2. Dispositif d'analyse de blindage (100) selon la revendication 1, **caractérisé en ce que** le moyen de réception de doigt (108) est adapté pour recevoir un doigt jusqu'à la main.

3. Dispositif d'analyse de blindage (100) selon la revendication 1 ou 2, **caractérisé par** au moins un moyen de réception de main (106) qui comprend un matériau flexible qui réfléchit et/ou absorbe le rayonnement électromagnétique, qui est étendu depuis l'enveloppe externe (102), qui comprend une pluralité de moyens de réception de doigt et qui est adapté pour recevoir la main jusqu'au poignet ;
- dans lequel le moyen de réception de main (106) comprend au moins l'un des constituants qui suivent :
- un matériau tissé qui comporte des fils conducteurs par conduction galvanique ;
- un matériau non tissé qui comporte des fibres conductrices par conduction galvanique ;
- un revêtement électro-conducteur ;
- un revêtement en graphite ; et/ou
- un revêtement en carbone.

4. Dispositif d'analyse de blindage (100) selon l'une quelconque des revendications 1 à 3, **caractérisé par** un moyen de réception de bras (104) qui comprend un matériau flexible qui réfléchit et/ou absorbe le rayonnement électromagnétique, qui est étendu depuis l'enveloppe externe (102) et qui est adapté pour recevoir un bras jusqu'à l'articulation du coude ;
- dans lequel le moyen de réception de bras (104) comprend au moins l'un des constituants qui suivent :
- un matériau tissé qui comporte des fils conducteurs par conduction galvanique ;
- un matériau non tissé qui comporte des fibres conductrices par conduction galvanique ;
- un revêtement électro-conducteur ;
- un revêtement en graphite ; et/ou
- un revêtement en carbone.

5. Dispositif d'analyse de blindage (100) selon l'une quelconque des revendications 1 à 4, **caractérisé en ce que** l'enveloppe externe comprend une partie de tubage (116) au travers de laquelle une gaine (136) est passée à l'intérieur du dispositif d'analyse de blindage ;
- dans lequel la partie de tubage (116) comprend au moins l'un des constituants qui suivent :
- un matériau tissé qui comporte des filaments conducteurs par conduction galvanique ;
- un matériau non tissé qui comporte des fibres conductrices par conduction galvanique ;
- un revêtement électro-conducteur ;
- un revêtement en graphite ; et/ou
- un revêtement en carbone.

6. Dispositif d'analyse de blindage (100) selon l'une quelconque des revendications 1 à 5, **caractérisé en ce que** :
- l'enveloppe externe (102) comprend un fond plat dans sa position de déploiement ;
- l'enveloppe externe (102) comprend une section en coupe transversale qui présente partiellement une forme d'ellipsoïde dans sa position de déploiement ;
- l'enveloppe externe (102) comprend une section en coupe transversale qui présente une forme de partie de cylindre dans sa position de déploiement ;
- l'enveloppe externe (102) comprend une section en coupe transversale qui présente une forme de demi-cylindre dans sa position de déploiement ;
- au moins une tige flexible (120, 122) est agencée dans l'enveloppe externe (102), laquelle tige flexible met en tension l'enveloppe externe dans sa position de déploiement en utilisation, dans lequel, pendant le transport dans la position de transport, l'enveloppe externe est sensiblement plate ;
- au moins une tige flexible (120, 122) est disposée dans l'enveloppe externe (102) pour mettre sous tension l'enveloppe externe dans sa position de déploiement pendant utilisation, la tige flexible étant selon une première position incurvée et la tige flexible étant selon une seconde position incurvée pendant le transport dans la position de transport de l'enveloppe externe dans laquelle l'enveloppe externe est plate ; et/ou
- l'enveloppe externe comprend des ouvertures pour l'insertion de tiges (120, 122) qui maintiennent l'enveloppe externe dans sa position de déploiement pendant utilisation.

7. Dispositif d'analyse de blindage (100) selon l'une quelconque des revendications 1 à 6, **caractérisé en ce que** l'enveloppe externe comprend une fenêtre de visualisation (114) qui comprend un matériau qui absorbe et/ou réfléchit les ondes électromagnétiques.
